# EUROPEAN PATENT APPLICATION

(11) **EP 3 200 138 A1**
(43) Date of publication of application: **02.08.2017**
(21) Application number: 16153521.6
(22) Date of filing: 29.01.2016
(51) Int. Cl.: G06Q 20/36, G06Q 20/38, G06Q 20/40

(54) **DIGITAL ASSET CONVERSION**

(71) Applicant: Mastercard International Incorporated, Purchase NY 10577 (US)
(72) Inventor: GOLOSHCHUK, Vladimir, Dublin, 18 (IE)
(74) Representative: Lawrence, Richard Anthony

(57) **Abstract**

A method of converting digital assets into a transaction currency is described that it suitable for use in a transaction system that is not adapted for transactions using the digital assets. The digital assets are stored so that they can be used with one or more exchanges adapted for conversion of the digital assets into the transaction currency. A balance in the transaction currency is established for use by a payment device. Rules are established for maintaining the transaction currency balance. When required by the rules for maintaining the transaction currency balance, digital assets are converted into the transaction currency at the one or more exchanges for maintaining the transaction currency balance in the transaction currency for use by the payment device. A suitable service is also described.

## Description

### Field of Disclosure

This disclosure relates generally to digital asset conversion. In embodiments, the disclosure relates to an infrastructure enabling digital assets such as virtual currency (cryptocurrency) to be converted to allow transactions is government-backed "flat" currency.

### Background of Disclosure

A virtual currency (also known as a digital currency) is a medium of exchange implemented through the Internet generally not tied to a specific government-backed "flat" (printed) currency such as the US dollar or the Euro and typically designed to allow instantaneous transactions and borderless transfer of ownership. The best known type of virtual currency is cryptocurrency, in which cryptography is used to secure transactions and to control the creation of new units. Several cryptocurrencies exist, of which the best known is Bitcoin. Bitcoin is decentralized in the sense that it has no central point of control. Transactions are recorded on a public ledger in the form of a block chain - a distributed database maintaining a continuously growing list of transaction data records. Cryptographic processes are used to harden the block chain against tampering and revision. Decentralization and a public ledger are typical features of cryptocurrencies.

Virtual currency is one type of electronic money - more generally, electronic money is any electronically stored money balance such as a money balance stored on a physical card with an embedded processor or adapted for transfer over a computer network. Electronic money based on a flat currency is typically centralized in that there is a central point of control over the money supply.

PayPal is an example of an electronic money system with centralized control, and systems such as Google Wallet and Apple Pay enable electronic money transactions using mobile devices.

At present, while cryptocurrencies are widely used in online communities, they are not generally used by "bricks and mortar" retailers. It would be desirable to allow wider use of cryptocurrencies in conventional transaction infrastructures as generally used by merchants.

### Summary of Disclosure

In a first aspect, the disclosure provides a computer-implemented service for converting digital assets into a transaction currency for use by a payment device in a transaction system that is not adapted for transactions using the digital assets, the service using a server with a suitably programmed processor adapted to: monitor a transaction currency balance in a user account associated with the payment device, and to compare the transaction currency balance with rules for maintaining the transaction currency balance; and where required to do so by the rules, instructing conversion of user digital assets at one or more exchanges into the transaction currency to maintain the transaction currency balance.

The payment device may be associated with an issuing bank, and the computer-implemented service may be adapted to receive the transaction currency balance from the issuing bank. The computer-implemented service may be adapted to receive details of transactions from the user account in the transaction currency from the issuing bank or the transaction system.

Instructing conversion of digital assets into the transaction currency at the one or more exchanges may comprise instructing the one or more exchanges to make a conversion transaction on behalf of an owner of the digital assets.

Instructing conversion of digital assets into the transaction currency at the one or more exchanges comprises advising an owner of the digital assets to make a conversion transaction at the one or more exchanges.

The digital assets may comprise cryptocurrency.

In a second aspect, the disclosure provides a method of converting digital assets into a transaction currency for use in a transaction system that is not adapted for transactions using the digital assets, the method comprising: storing digital assets for use with one or more exchanges adapted for conversion of the digital assets into the transaction currency; establishing a balance in the transaction currency for use by a payment device, and establishing rules for maintaining the transaction currency balance; and when required by the rules for maintaining the transaction currency balance, instructing conversion of digital assets into the transaction currency at the one or more exchanges for maintaining the transaction currency balance in the transaction currency for use by the payment device.

The digital assets may comprise cryptocurrency assets. The rules may comprise converting digital assets when the transaction currency balance falls below a predetermined level, or converting digital assets after a transaction in the transaction currency to maintain the transaction currency balance at a predetermined level.

Establishing the transaction currency balance may comprise converting digital assets to provide a predetermined transaction currency balance.

Instructing conversion of digital assets into the transaction currency at the one or more exchanges may comprise instructing the one or more exchanges to make a conversion transaction on behalf of an owner of the digital assets.

Instructing conversion of digital assets into the transaction currency at the one or more exchanges may comprise advising an owner of the digital assets to make a conversion transaction at the one or more exchanges.

### Brief Description of Figures

Embodiments of the disclosure will now be described, by way of example, with reference to the accompanying Figures, of which:
Figure 1 shows a conventional transaction infrastructure by which transactions are made using payment devices;
Figure 2 shows a mobile computing device adapted for use with the infrastructure of Figure 1;
Figure 3 shows an exemplary existing virtual currency infrastructure;
Figure 4 shows an exemplary existing virtual currency infrastructure using an exchange service;
Figure 5 shows a modified transaction infrastructure according to an embodiment of the disclosure linking elements of the conventional transaction infrastructure of Figure 1 with the virtual currency infrastructure of Figures 3 and 4;
Figure 6 shows a structure of user accounts indicated at the location of account provider in the infrastructure of Figure 5;
Figure 7 shows an exemplary method of use of a payment device according to an embodiment of the disclosure; and
Figure 8 shows steps in an exemplary transaction using the infrastructure of Figure 5.

### Description of Specific Embodiments

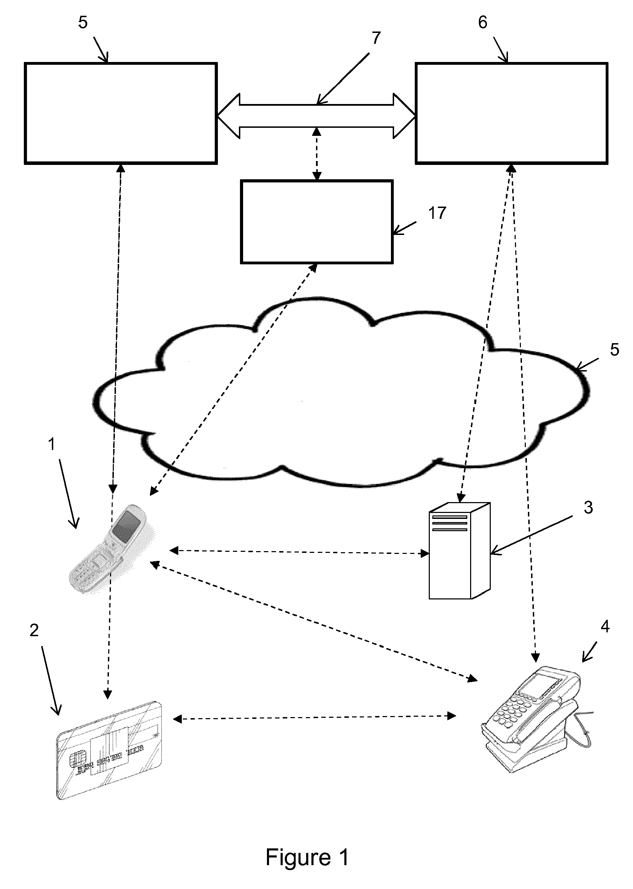

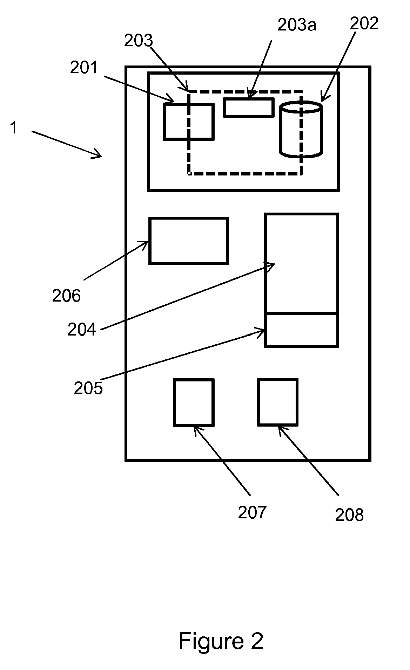

Specific embodiments of the disclosure will be described below with reference to the Figures. Before embodiments of the disclosure are described, a conventional transaction infrastructure architecture will be described with reference to Figure 1 and an exemplary virtual currency architecture will be described with reference to Figure 2.

In the conventional transaction infrastructure architecture of Figure 1, a user (not shown) is provided with a payment device - this may be for example a payment card 2, but it may also be a computing device (such as a mobile phone 1). This computing device comprises a mobile payment application that allows use of a payment card - this may be either as a proxy for an existing physical card, or of an entirely virtual card - in either case, the mobile payment application may be considered to act for a "digitized" card. The mobile payment application comprises a cardlet (held securely, for example in a mobile phone SIM) performing card functions and is associated a wallet allowing user management of cards and accounts.

Mobile phone 1 is also shown as the mechanism for the user to interact with other elements of the system over a suitable network 5 - network 5 here represents any appropriate communication network for the communication path indicated, and may be the public internet, a cellular communications network or a private network, depending on the parties involved in the communication and the need for the communication path to be secure.

The payment device is adapted for transaction with a point of interaction (POI) terminal 4 such as a point of sale (POS) terminal or an automated teller machine (ATM) and transactions may also be conducted with an online merchant 3. The payment card 2 will typically include a chip and a wireless transmitter and receiver adapted for short range communication by protocols such as those defined under ISO/IEC 14443 - if used as a payment device, the mobile phone 1 (which will typically be adapted to implement short range communication under the NFC standard) must have similar capability and an appropriate payment application installed.

There is a network connection between the user computer devices and a card issuing bank 5 or system associated with the user. A banking infrastructure 7 will also connect the card issuing 5 and the merchant's transaction acquiring bank 6, allowing transactions to be carried out between them. This banking infrastructure will typically be provided by a transaction card provider who provides transaction card services to the card issuing bank 5. The banking infrastructure 7 provides authorization at the time of purchase, clearing of the transaction and reconciliation typically within the same working day, and settlement of payments shortly after that. The banking infrastructure 7 comprises a plurality of switches, servers and databases, and is not described further here as the details of the banking infrastructure used are not necessary for understanding how embodiments of the disclosure function and may be implemented, save to note that associated with the banking infrastructure 7 is a digital enablement service 17 adapted to support use of digitized cards, for example through EMV tokenisation protocols. As noted, the mobile phone comprises a wallet to enable user management of accounts (and, typically, aspects of security of the device) - to avoid confusion with other uses of the term wallet in this specification, this will be referred to as a "payment device wallet" below.

Using this approach, a computing device - shown as a mobile device in Figure 1, but not necessarily so - is adapted to make "electronic money" transactions using "flat" money over a conventional transaction infrastructure. Elements of such a computing device are shown in Figure 2.

Figure 2 shows a mobile phone 1, though it should be noted that any other portable computing apparatus such as a laptop, notebook or tablet computer can be used as computing apparatus in embodiments of the disclosure. The mobile phone comprises a processor 201 and a memory 202, such that the memory stores and the processor will subsequently run applications (shown generally as application space 203) such as a payment application 203a. The mobile phone has a user interface comprising a display 204 and a touchscreen 205 (or other input device) and associated drivers to allow a user to enter data into and view information from the applications 203. The mobile phone 1 also has a cellular telecommunications capability, including subscriber information module (SIM) 206 and wireless communication element 207 together providing the ability to connect to a cellular communications network. The mobile phone may need to perform cryptographic operations in order to interact securely with a POS terminal - this may be achieved more securely by a cryptographic capability within the subscriber information module 206, such as a cryptographic processor in a tamperproof element - another approach is to manage without a secure element by using Host Card Emulation (HCE). Implementation of HCE in Android is discussed at
https://developer.android.com/guide/topics/connectivity/nfc/hce.html - other operating systems are developing or have developed similar approaches. In other kinds of computing devices other forms of tamper resistant hardware may be used to increase the security of cryptographic processing and sensitive data. The mobile phone is here shown as having a local networking element 208 as well, in order to establish a short range wireless network connection - however, in other embodiments the mobile phone 1 may only be able to make network connections through a cellular telecommunications network. Where the computing device is not a mobile phone, then while a network connection is needed to enable communication between the computing device and other system elements, this need not involve cellular telecommunications. For example, the computing device may be a tablet computer without cellular telecommunications capability but capable of making a local wireless network connection.

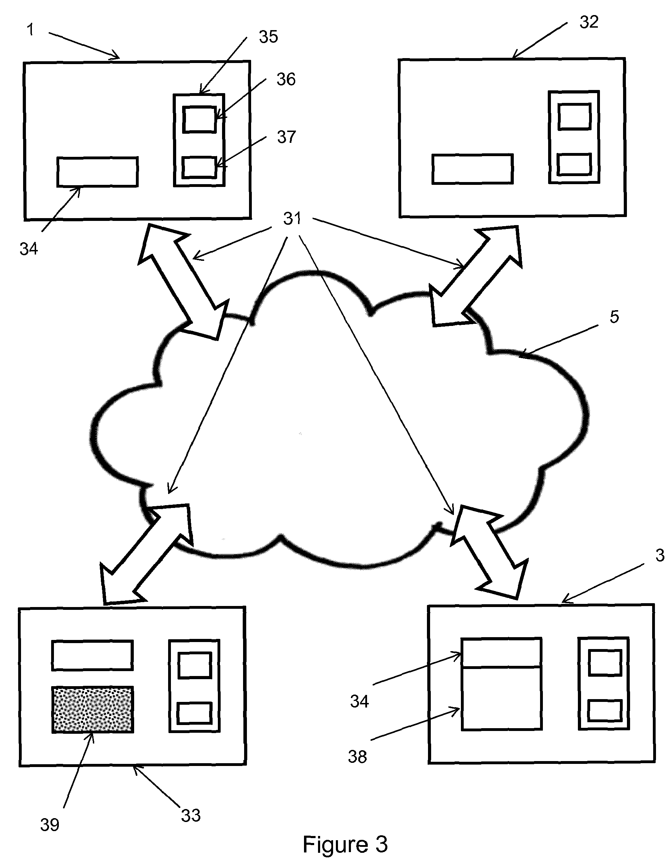

Figure 3 shows a plurality of computing devices interacting through a peer-to-peer network 31 implemented over the internet 5 - in this case, these computing devices include mobile phone 1, along with online merchant 3 and an exemplary user computing device 32 (of very many others in the network). One user computing device 33 is adapted for mining new currency - a process briefly discussed below. Each computing device has a cryptocurrency client 34 for key generation and sending and receiving payments and a cryptocurrency data directory 35. The data directory comprises block chain information 36 and the user's cryptocurrency wallet 37. Other elements shown are the online merchant's storefront application 38, shown adjacent to the merchant's cryptocurrency client 34 as the two interact together to allow cryptocurrency payments to be made to the merchant 2. The other element shown is a mining engine 39 shown as part of the mining user computing device 33 - again, mining user computing device 33 is representative of many others on the system. The roles of each element of the system will be briefly described below, but for detailed description of individual cryptocurrency systems the skilled person will consult appropriate resources - for example, the Bitcoin wiki found at https://en.bitcoin.it/wiki/Main Page.

Information personal to the user is kept in the cryptocurrency wallet 37. This contains one or more addresses for the user - these are alphanumeric identifiers that represent a possible destination for a cryptocurrency payment to that user. A user can typically generate a new address at no cost - typically an address is a single use token for a specific transaction. The wallet also contains the user's cryptographic keys. An address is a public key corresponding to one of the user's private keys - the user can generate new key pairs as needed from a base key. The wallet also contains the user's accounts - when cryptocurrency is received, it is assigned to an account. Other cryptocurrency structures are possible (for example, addresses and accounts can be conflated in some cryptocurrency types), but the exemplary approach described here is widely used.

Block chain information 36 is public and is shared on a peer-to-peer basis, but provides a mechanism for verification of transactions as described below. The block chain itself is a transaction database shared by all nodes of the network - a full copy of the block chain for a cryptocurrency contains every transaction ever executed, allowing the determination of values associated with any given address. The blocks are chained, as each block contains a hash of the previous block. Once a block is mature in the chain, it is not practical to modify it computationally because each later block would have to be regenerated.

A typical transaction involving a payment from Alice to Bob operates in the following way. Bob creates a new address using the cryptocurrency client, and provides the address (a public key for a private key held by Bob) to Alice as a destination for the payment. Alice makes the transaction using her cryptocurrency client by indicating a payment to the address indicated by Bob from one of her own addresses - this is done by signing a transaction request with her private key for the address, the public key being usable to establish that the transaction was sent by Alice to Bob's address. Transaction requests are broadcast across the system for incorporation into a transaction block.

A new block is established by "mining". This is a process in which a candidate for a block is determining the answer to a computationally difficult problem relating to the last block on the chain - typically achieving a particular result for a hash function on that last block using a nonce value, the computational difficulty arising from there being a large number of possible nonce values and no way other than brute force of determining which nonce will achieve the desired result. Once a miner has a valid block, this can be added to the block chain - it will typically contain a reward for the miner (an agreed number of cryptocurrency units assigned to a miner's address). A miner may also be rewarded for transactions added to the new block. The new block chain with the additional added block (including Alice's payment to Bob) is broadcast around the network.

The transaction cannot immediately be considered verified by virtue of its inclusion in the latest block. However, when further blocks are added, it becomes effectively impossible to tamper with the transaction record, as this could only be done by regeneration of subsequent blocks. The transaction can be considered to be verified at this stage.

This type of transaction can be termed "on-the-chain" - it is on the public record and requires the existence of miners to verify it. On-the-chain transactions have a unique wallet address which is the public key string of a cryptographic key pair (generated for example by Elliptic Curve Cryptography). It is also possible to have "off-the-chain" transactions for which there is no public record. This may be achieved with a database (such as MS-SQL, MySQL, Oracle etc.) containing a representation of holdings with balance swaps possible between different holdings retained in the database. For example, Coinbase or Bitstamp does not move bitcoins on the chain for internal reconciliation but just initiates a balance change on their database of users' holdings.

In order to prevent risk of loss, many users prefer to keep cryptocurrency funds offline and to have their use of cryptocurrency mediated by a service. To achieve this, many use shared wallet services from providers such as Bitstamp and Coinbase. These do not change the basic transaction mechanism of the cryptocurrency, but provide transaction services for a user by establishing an address and sending cryptocurrency on behalf of the user, often in return for a flat currency payment (in which case these services are also operating as an exchange).

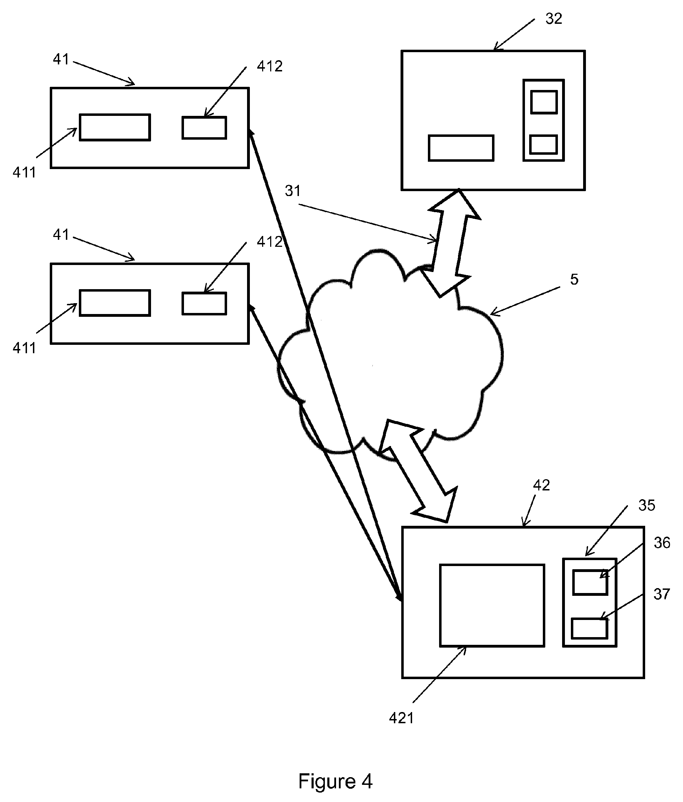

Figure 4 illustrates the architecture of Figure 3 showing an exchange service, here also acting as a shared wallet service. The peer-to-peer network of Figure 4 may contain all the node types shown in Figure 3, though for convenience not all types of node shown in Figure 3 are shown in Figure 4. Figure 4 shows two new types of node - a shared wallet service node 42, and a shared wallet user node 41.

The shared wallet user node 41 does not itself need to hold cryptocurrency and therefore does not need to operate as a peer-to-peer network node, but may for example have a client/server relationship with the shared wallet service node 42. A shared wallet client application 411, preferably with secured memory 412 (in embodiments where private keys are to be held by the user) is used to communicate with the shared wallet service.

The shared wallet service node 42 has a shared wallet service server 421 holding and communicating with user accounts. As the shared wallet service node 42 is a node on the peer-to-peer cryptocurrency network it comprises the elements needed for such a node, such as data directory 35, with the shared wallet service server 421 having functions including that of the cryptocurrency client.

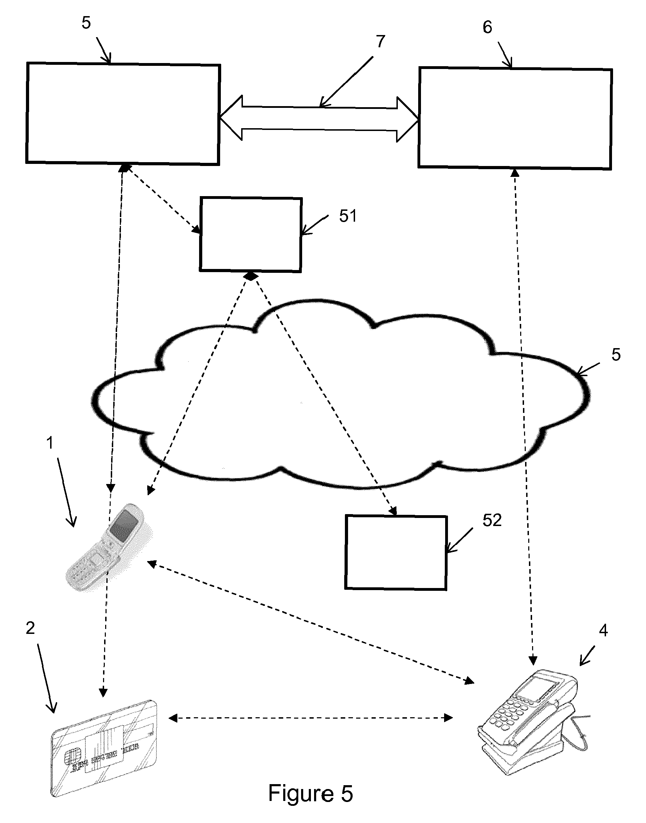

Figure 5 illustrates an embodiment of the disclosure where the conventional transaction infrastructure of Figure 1 are augmented with elements of the cryptocurrency infrastructure of Figures 3 and 4, using a new service model, to enable effective use of cryptocurrency in a conventional transaction architecture.

In the arrangement shown, mobile phone 1 is used as a payment management device as before, with payment card 2 as payment device. The digital enablement service is not shown (but may in practice be present if mobile phone 1 is also used as payment device). An exchange service 51 supporting transactions according to an embodiment of the disclosure interacts with issuer 5 and also with the payment management device and at least one peer-to-peer cryptocurrency exchange 52. In the arrangement shown, the user communicates not only with the exchange service 51, but also with the cryptocurrency exchange 52. Exchange service 51 is shown as a separate element in this arrangement, but may for example be a service provided by the card issuer, in which case it may be provided as an element of the issuer 5.

In embodiments of the disclosure, the payment device may be used to transact with merchants using a conventional flat currency transaction system but drawing on virtual currency resources. This increases enormously the options available for the user in spending virtual currency. As will be discussed below, a variety of options are possible using this overall approach. In some cases there may be a transfer during the course of the transaction, and in others there may be an offline transfer to restore an account balance to a predetermined value.

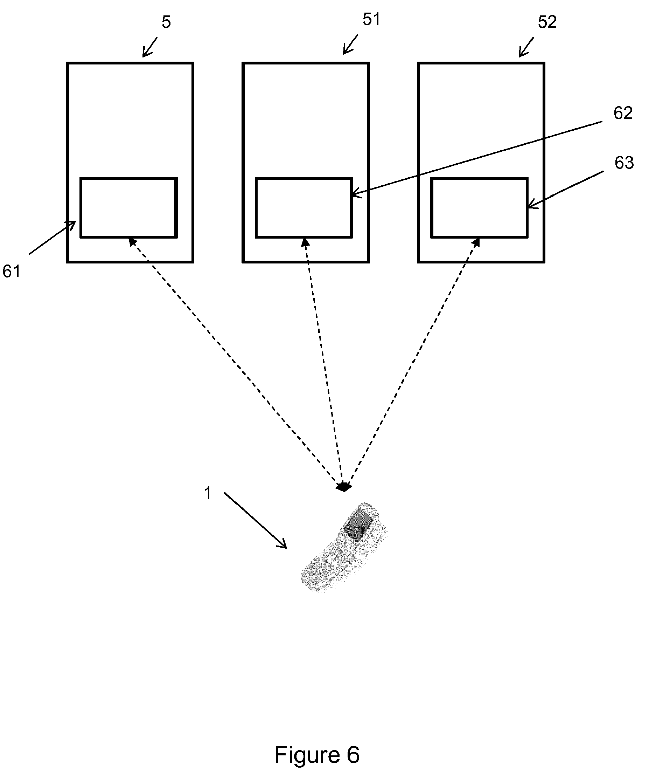

Figure 6 shows a structure of user accounts indicated at the location of account provider. Issuer 5 provides a payment device account 61 used for transactions using the conventional infrastructure. From the perspective of other elements of the transaction infrastructure (in particular the terminal 4 and the acquiring bank 6), this payment device account 61 operates consistently with any other user account backed by an issuer 5 and transacts in one or more "flat" currencies. Exchange service 51 provides an exchange service account 62 used to ensure that there is a currency balance available to be used by the payment device 2. In embodiments, this may be integrated with the payment device account 61 (and may thus be provided by the issuer 5) but here it is shown as a separate service. The user also has a cryptocurrency account 63 with cryptocurrency exchange 52 - as shown below, in embodiments the user allows access to the cryptocurrency account to the exchange service 51 so that funds may be drawn down from the cryptocurrency account for use by the payment device 2.

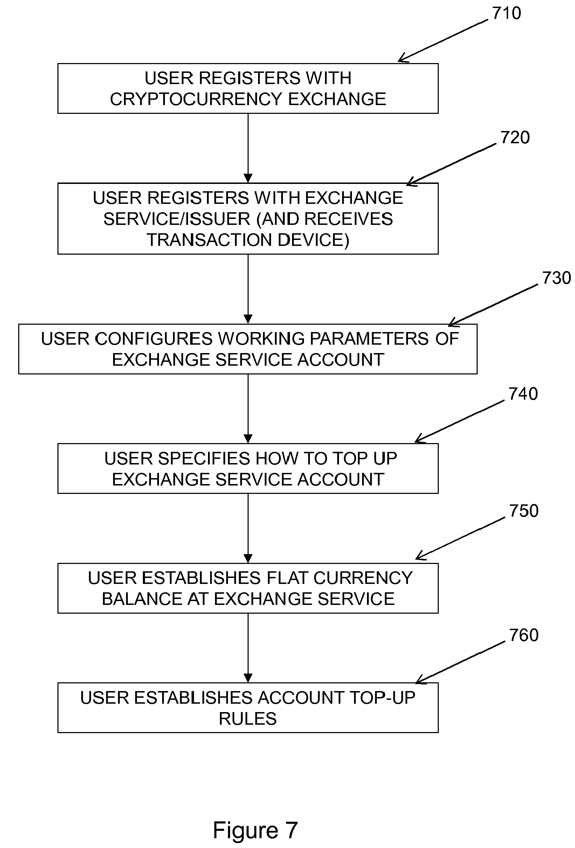

Figure 7 shows an exemplary method of use of a payment device 2 according to an embodiment of the disclosure. Firstly, a user registers 710 with an exchange such as cryptocurrency exchange 52 where his or her cryptocurrency is then stored. It should be noted that this step - and in general, embodiments of this disclosure - do not require use of cryptocurrency. This exchange may also be a way for users to store flat currency, and may be useful where the flat currency is not universally usable as a medium for transactions. The user also registers 720 with the exchange service 51 and with the issuer 5 (as noted above, these may be the same party) and receives a transaction device (such as transaction card 2) that can be used to draw on cryptocurrency assets in the manner described below. Alternatively, the user may already have a transaction card 2 from the issuer 5 and may be able to expand their service offering to draw on cryptocurrency assets in this way by also registering with the exchange service 51 and possibly also by empowering the exchange service 51 to interact with the issuer 5 on the user's behalf in certain situations set out below.

The user will then (for example, using the payment management device) configure 730 his or her account with the exchange service 51 to establish suitable working parameters. These may include access details enabling the exchange service 51 to represent the user at the cryptocurrency exchange so that the exchange service 51 can draw down on the user's cryptocurrency balance and convert it to a flat currency. Where the user has access to multiple cryptocurrency exchanges 52, the user may also specify 740 which cryptocurrency exchange should be used to top up a flat currency account (or may establish a preferred order, or other rules depending on the nature of the transaction and the currency balances involved).

The user can also establish 750 a balance of flat currency to be held by the exchange service 51 on behalf of the user - this balance of flat currency can then be left available for instant access for user transactions. To establish an initial balance, the exchange service may then convert cryptocurrency as necessary using a cryptocurrency exchange 52. A practical issue here is that conversion between cryptocurrency and flat currency may be difficult to achieve during the normal time period of a transaction using a conventional transaction infrastructure (up to a few seconds). An off-the-chain cryptocurrency transaction is potentially of this speed, but requires suitable resources to be available. An on-the-chain transaction, with verification, is not this quick because of the need to verify the transaction through embedding it in a block chain, which typically takes several minutes. The exchange service 51 thus performs both a coordinating and a buffering role in enabling use of cryptocurrency resources for transactions.

The user may then specify 760 rules for topping up the account with the exchange service 51. For example, the balance can then be topped up at a predetermined point if it falls below a certain point (or it can simply be topped up directly on any transaction). The top-up could be automatic and so under the control of the exchange service, or if the user does not wish to release control to the exchange service 51, the top-up could be a manual process with messages sent to the user to advise when a top-up was required. If an automatic top-up is used, then the exchange service 51 will initiate a buy order at the relevant exchange to top-up the user account.

Many models are possible within this structure for the user's account with the issuer. In one model, the account could be used only for transactions from the user's cryptocurrency reserves, in which case any transaction would contribute to triggering the top-up process. In another model, the account could draw from both flat currency and cryptocurrency sources, and appropriate rules could be determined for drawing on the cryptocurrency reserves (for example, the account level falling below a certain level, or falling below a certain level for a certain length of time, or if a monthly payment had not been made from any other source). The payment device could be a prepaid card (in which case a positive balance would have to be maintained for transactions to be authorised by the issuer) or a credit card, in which case payments could be authorised until the negative balance on the account exceeded a credit limit.

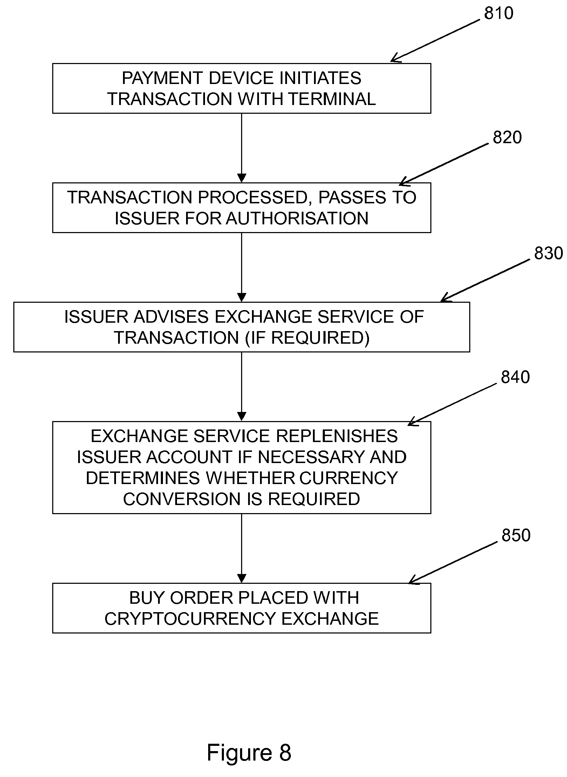

The steps in an exemplary transaction using this infrastructure are set out below with reference to Figure 8. The payment device 2 is presented to the terminal 4 and a transaction is initiated 810 in the conventional way. From the perspective of the terminal 4 and the acquirer 9, the transaction will be entirely conventional and will be conducted in an appropriate flat currency - the account with the issuer will typically be in a specific flat currency as base currency, and while there may the option typically allowed at a terminal to transact in the merchant's or the user's base currency, it will not be relevant that the payment device ultimately draws on cryptocurrency (or any other currency) reserves.

The transaction passes through the transaction infrastructure 7 to the issuer 5 for authorisation 820. Authorisation will normally be made on the basis of a number of factors, including authentication of the user and there being a sufficient balance on the user account. While in embodiments it may be possible to involve the exchange service 51 at the authorisation stage to ensure that there are sufficient user funds available, this may not be generally desirable except perhaps where the exchange service 51 is integrated with the issuer as otherwise authorisation will be delayed - if authorisation is given then the transaction will complete in the normal manner.

Depending on the rules established for use of the user issuer account, there may then be a message sent 830 from the issuer to the exchange service to advise on the transaction - this may take place after every transaction whether or not account replenishment is required so that the exchange service can track user account activity, or may only take place when replenishment of the user issuer account is required. When the exchange service determines 840 that issuer account replenishment is required, it transfers flat currency accordingly and may, if the level of flat currency that it holds will fall too low as a result, also determine that it needs to convert cryptocurrency to replenish the exchange service account, the issuer account, or both. The exchange service then places 850 a buy order for flat currency at the relevant cryptocurrency exchange 52 as determined by its replenishment rules, or (if top-ups are manual rather than automatic) advises the user what transaction is required with which exchange. The currency is then bought (with any fees paid) using the user's cryptocurrency reserves through the user's account with the cryptocurrency exchange.

A variety of top-up strategies may be used. A top-up may be triggered only when the available balance falls to a certain level. Alternatively, a top-up may be triggered after every transaction to maintain the account at the originally established level - this will require more top-up activity, but will give the user greater assurance that the level of funds available will meet expectations.

As has been noted above, many variations are possible within this overall structure. The exchange service 51 could in principle be merged with the issuer 5 or with a cryptocurrency exchange 52 - in principle, all three functions could be provided with one provider. Where there is consolidation of this kind, accounts in the same currency (such as the user issuer account and the user flat currency account with the exchange service) could in principle be consolidated together, obviating the need for process steps that relate to interaction between the two. The user's cryptocurrency reserves could in principle be held at the exchange service, at the cryptocurrency exchanges, or elsewhere altogether, in which case there may be additional steps required to transfer the cryptocurrency to the correct system element with appropriate authorisation from the user.

As noted above, this approach is particularly effective to allow a user's cryptocurrency reserves to be used through a conventional transaction infrastructure, but it is not limited to this purpose. It may also be employed, for example, where a user has reserves in any other currency (or indeed any other assets) that are convertible into a flat currency but not at the speed required for normal transaction flow in a conventional transaction infrastructure (or not reliably so). The skilled person will appreciate that further modifications may be made to the approach set out above in accordance with the spirit and scope of the disclosure.

## Claims

1. A computer-implemented service for converting digital assets into a transaction currency for use by a payment device in a transaction system that is not adapted for transactions using the digital assets, the service using a server with a suitably programmed processor adapted to:
monitor a transaction currency balance in a user account associated with the payment device, and to compare the transaction currency balance with rules for maintaining the transaction currency balance; and
where required to do so by the rules, instructing conversion of user digital assets at one or more exchanges into the transaction currency to maintain the transaction currency balance.

2. The computer-implemented service as claimed in claim 1, wherein the payment device is associated with an issuing bank, and wherein the computer-implemented service is adapted to receive the transaction currency balance from the issuing bank.

3. The computer-implemented service as claimed in claim 2, wherein the computer-implemented service is adapted to receive details of transactions from the user account in the transaction currency from the issuing bank or the transaction system.

4. The computer-implemented service as claimed in any preceding claim, wherein instructing conversion of digital assets into the transaction currency at the one or more exchanges comprises instructing the one or more exchanges to make a conversion transaction on behalf of an owner of the digital assets.

5. The computer-implemented service as claimed in any of claims 1 to 3, wherein instructing conversion of digital assets into the transaction currency at the one or more exchanges comprises advising an owner of the digital assets to make a conversion transaction at the one or more exchanges.

6. The computer-implemented service of any preceding claim, wherein the digital assets comprise cryptocurrency.

7. A method of converting digital assets into a transaction currency for use in a transaction system that is not adapted for transactions using the digital assets, the method comprising:
storing digital assets for use with one or more exchanges adapted for conversion of the digital assets into the transaction currency;
establishing a balance in the transaction currency for use by a payment device, and establishing rules for maintaining the transaction currency balance; and
when required by the rules for maintaining the transaction currency balance, instructing conversion of digital assets into the transaction currency at the one or more exchanges for maintaining the transaction currency balance in the transaction currency for use by the payment device.

8. The method of converting digital assets as claimed in claim 7, wherein the digital assets comprise cryptocurrency assets.

9. The method of converting digital assets as claimed in claim 7 or claim 8, wherein the rules comprise converting digital assets when the transaction currency balance falls below a predetermined level.

10. The method of converting digital assets as claimed in claim 7 or claim 8, wherein the rules comprise converting digital assets after a transaction in the transaction currency to maintain the transaction currency balance at a predetermined level.

11. The method of converting digital assets as claimed in any of claims 7 to 10, wherein establishing the transaction currency balance comprises converting digital assets to provide a predetermined transaction currency balance.

12. The method of converting digital assets as claimed in any of claims 7 to 10, wherein instructing conversion of digital assets into the transaction currency at the one or more exchanges comprises instructing the one or more exchanges to make a conversion transaction on behalf of an owner of the digital assets.

13. The method of converting digital assets as claimed in any of claims 7 to 12, wherein instructing conversion of digital assets into the transaction currency at the one or more exchanges comprises advising an owner of the digital assets to make a conversion transaction at the one or more exchanges.
